# EUROPEAN PATENT SPECIFICATION

(11) **EP 3 060 039 B1**
(45) Date of publication and mention of the grant of the patent: **11.10.2017**
(21) Application number: 14786201.5
(22) Date of filing: 20.10.2014
(51) Int. Cl.: A01N 25/02, A01N 25/30

(54) **HIGHLY CONCENTRATED LIQUID FORMS OF POLYSACCHARIDE ETHERS**
HOCHKONZENTRIERTE, FLÜSSIGE FORMEN VON POLYSACCHARIDETHERN
FORMES LIQUIDES HAUTEMENT CONCENTRÉES D'ÉTHERS DE POLYSACCHARIDE

(30) Priority: 22.10.2013 US 201361894103 P; 28.11.2013 EP 13194847
(43) Date of publication of application: 31.08.2016
(73) Proprietor: Akzo Nobel Chemicals International B.V., 6824 BM Arnhem (NL)
(72) Inventor: WESTBYE, Peter, S-444 45 Stenungsund (SE); YUAN-HUFFMAN, Qingwen Wendy, Belle Mead, NJ 08502 (US)
(74) Representative: Akzo Nobel IP Department
(86) International application number: PCT/EP2014/072385
(87) International publication number: WO 2015/059064

(56) References cited:
- WO-A1-02/48254
- WO-A2-2012/080196
- US-A- 4 566 993
- US-A1- 2005 196 353
- US-A1- 2010 261 610

## Description

### Field of the Invention

The present invention relates to a liquid composition comprising a high concentration of a non-ionic water-soluble polysaccharide ether, a polyol having 3-4 hydroxyl groups, water and at least one salt of a polyvalent inorganic anion. The invention also relates to agricultural formulations obtainable by adding an agriculturally active ingredient and such a liquid composition to water, and to methods for treating a plant with such an agricultural formulation.

### Background of the Invention

Polysaccharide ethers are known as additives in agricultural formulations. Various cellulose ethers have been suggested for use in agricultural formulations, for example as sticking agents and deposition aids, and guar gum has been proposed as a drift reducing agent.

US 6,534,563 relates to the use of polymers as sticking agents in aqueous agricultural formulations, and teaches the use of ethyl hydroxyethyl cellulose with a Mw of ∼10⁵ g/mol.

WO 2012/080196 relates to the use of hydrophobically modified polysaccharide ethers, such as hydrophobically modified methyl ethyl hydroxyethyl cellulose as deposition aids in agricultural formulations.

WO 99/012869 relates to the use of guar gum as a drift reducing agent in an aqueous agricultural formulation.

WO02/48254 relates to aqueous suspensions of cellulose ethers containing electrolytic salts to aid their stability.
US 4,566,993 relates to liquid detergent formulations containing cellulose ethers, where glycerol is added to prevent phase separation and lumping of the cellulose ether under cold conditions.

The concentration of the polysaccharide ethers in the agricultural formulations is generally very low, in the order of 0.005-0.5 wt%, and in order to obtain the desired effect from the polysaccharide ethers, it is important that the polysaccharide ether is evenly distributed in the agricultural formulation. Further, as the agricultural formulation is generally sprayed onto the crops, it is important that it is free of lumps and big undissolved particles to prevent clogging of the spraying nozzles.

The most common form of polysaccharide ethers, such as cellulose ethers, is as a powder. However, dissolving such a powder in water is inconvenient both for the time needed, as it has to be dissolved little by little, and the problems that can occur. The most severe problem is the formation of so called "fish eyes", i.e. agglomerated polysaccharide ether particles that has been swollen in the corona but not in the core. Such fish eyes are very hard to dissolve on short time scales, since mass transport of water into these particles is very slow.

It would be convenient to have a form of polysaccharide ethers that is of relatively high concentration, yet easy to dilute without giving rise to the problems connected with fish eye formation.

US2002/0121224 relates to a suspension of water-soluble, non-ionic cellulose ethers with low viscosity. However, the long term stability of such suspensions may be limited, and the relatively high quantities of salt are not very attractive in some applications.

Therefore, it remains a need in the art to provide a highly concentrated polysaccharide ether composition that can be easily diluted in water, and that has a long shelf life, and wherein the polysaccharide ether from such composition, when added to an agricultural formulation, gives the desired properties to the agricultural formulation.

### Summary of the Invention

One object of the present invention is to provide a liquid polysaccharide ether containing composition that at least partially meets the need in the art.

Another object of the invention is to provide an agricultural formulation that exhibit *inter alia* desired anti-drift properties, deposition properties and/or rainfastness properties.

It has now surprisingly been found that these objects can be met by a liquid composition comprising a high concentration of a non-ionic water-soluble polysaccharide ether, a polyol having 3-4 hydroxyl groups, water and at least one salt of a multivalent inorganic anion.

The composition of the invention, which can contain from 2 to 30 wt%, based on the total weight of the composition, of a non-ionic, water-soluble polysaccharide ether, is a low viscous liquid at room temperature and can easily and quickly be diluted in water to low concentrations, such as from 0.005 to 0.5 wt% of the polysaccharide ether, without the need for vigorous stirring, and without any significant formation of fish-eyes.

The composition of the invention further exhibits long term stability (shelf-life) and resistance to freeze-thawing cycles without irreversibly forming agglomerates.

The agricultural formulation formed by adding the composition of the invention and at least one agriculturally active agent to water is given the desired properties from the polysaccharide ether.

The invention will now be described more in detail.

### Detailed Description of the Invention

In a first aspect, the present invention relates to a liquid composition comprising
a) 2 to 30, preferably 2 to 25, more preferably 5 to 20, most preferably 8 to 16 wt%, based on the total weight of the liquid composition, of a non-ionic water-soluble polysaccharide ether;
b) 55 to 90, preferably 60 to 85, more preferably 65 to 80 wt%, based on the total weight of the liquid composition, of a polyol having 3 to 4 hydroxyl groups;
c) 5 to 25, preferably 6 to 20, more preferably 7 to 15 wt%, based on the total weight of the liquid composition, of water; and
d) 0.1 to 5, preferably 0.3 to 4, more preferably 0.5 to 3 wt%, based on the total weight of the liquid composition, of at least one salt of a multivalent inorganic anion.

The non-ionic water-soluble polysaccharide ether suitable for use in the present invention may be linear or branched, and is preferably a cellulose ether or guar gum ether.

Cellulose ethers suitable for use in the present invention may have a turbidity point (flocculation temperature) from 25°C to 100°C measured in a 1% by weight aqueous solution, but polysaccharide ethers having a turbidity point of above 100°C may also be used. Preferably, the cellulose ether has a turbidity point of 30°C to 80°C. The viscosity (hereinafter the "1% viscosity") is normally between 5 and 15,000 mPa*s measured at 1 wt% concentration in water at pH =7 with a Brookfield viscosimeter, type LV, at 12 rpm at 20°C (Spindle No 2 is used for measuring viscosities up to 3,500 mPa*s, and Spindle No 3 is used for measuring viscosities above 3,500 mPa*s). Cellulose ethers having a viscosity of 7,000 mPa*s or higher, such as 8,000 mPa*s or higher may be advantageous.

The DS_{alkyl} of the cellulose ether may be 0 or from 0.1 to 2.5, preferably from 0.2 to 2.0, more preferably from 0.3 to 1.3, wherein the alkyl has 1-4 carbon atoms. The DS_{alkyl}, which refers to the lower alkyl groups having 1-4 carbon atoms, is adapted to the hydrophobicity of these alkyl groups, which means that DS is normally lower for the more hydrophobic groups propyl and butyl than it is for methyl and ethyl. DS_{methyl} is suitably 0.3-2.5, preferably 0.5-2.0, and most preferably 0.7-1.9. DS_{ethyl} is suitably 0.1-1.5, preferably 0.3-1.2, and most preferably 0.5-1.0.

The MS_{hydroxyalkyl} of the cellulose ether may be 0 or from 0.2 to 4.0, suitably 1.0-3.0, and preferably 1.5-2.8, wherein the hydroxyalkyl is hydroxyethyl, hydroxypropyl and/or hydroxybutyl. The MS_{hydroxyethyl} is also normally within this general range. The MS_{hydroxypropyl} is normally within a range of 0.1-2.0, suitably 0.2-1.7, and preferably 0.3-1.5. If hydroxybutyl groups are present, the MS_{hydroxybutyl} is normally < 0.5.

The MS_{hydrophobe} of the cellulose ether may be 0 or from 0.001 to 0.02, wherein the hydrophobe is a hydrocarbyl group having from 10 to 18 carbon atoms. When the polysaccharide ether is hydrophobically modified, the product typically has a MS_{hydrophobe} of 0.001 or more, preferably 0.003 or more, and most preferably 0.005 or more. The MS_{hydrophobe} is preferably 0.020 or less, more preferably 0.015 or less, and most preferably 0.010 or less. The hydrophobic groups are suitably derived from a glycidyl ether or a chloroglyceryl ether of a C10 to C18, preferably C12 to C16, and most preferably C12 to C14 alcohol that is preferably ethoxylated; from a C10 to C18, preferably C12 to C16, and most preferably C12 to C14 alkyl halide; or from a C12 to C20, preferably C14 to C18, and most preferably C14 to C16 α-olefin epoxide.

The terms DS_{alkyl}, MS_{hydrophobe}, and MS_{hydroxyalkyl} are used in their regular connotation, and give an overall account of the average number of the different substituents per anhydroglucose unit. DS, the degree of substitution, is the average number of hydroxyl positions on the anhydroglucose unit that have been reacted, and can by definition vary between 0 and a maximum of 3. MS, the molar substitution, is defined as the number of moles of reagent present per mole of anhydroglucose unit. This number could by definition be higher than 3. For example, once a hydroxyl group of the anhydroglucose unit has reacted with one reagent molecule, e.g. with an alkylene oxide molecule, the newly formed hydroxyl group can further react with an additional alkylene oxide molecule. The process could then be repeated several times, forming polyoxyalkylene chains.

In the cellulose ether, at least one of DS_{alkyl} and MS_{hydroxyalkyl} is not 0.

Suitable examples are water-soluble alkyl cellulose ethers, such as hydroxyethyl cellulose (HEC), ethyl hydroxyethyl cellulose (EHEC), hydroxybutyl methylcellulose (HBMC), hydroxypropyl methylcellulose (HPMC), methyl ethyl hydroxyethyl cellulose (MEHEC), and hydrophobically modified ethyl hydroxyethyl cellulose (HMEHEC).

Ethyl hydroxyethyl cellulose (EHEC) and methyl ethyl hydroxyethyl cellulose (MEHEC) having a 1% viscosity of at least 7,000, preferably at least 8,000, more preferably of at least 10,000 mPa*s are especially suitable.

When the polysaccharide ether is a guar gum ether, it is preferably a hydroxypropyl guar gum.

The substituents and the degree of substitution are chosen such that the polysaccharide ethers, of the invention are water-soluble.

Herein a product will be defined as water soluble, if after adding 1 g of product per litre water (0.1 % by weight) with stirring at 25°C, adjustment of the pH to a value of 6-7, using NaOH or HCl as appropriate, and after further stirring for 16 hours at said temperature, at least 20, preferably at least 40, more preferably at least 60, even more preferably at least 80 and most preferably at least 90% by weight of the product added is dissolved in the water.

The degree of substitution of hydroxyalkyl and alkyl groups, MS_{hydroxyalkyl}, MS_{hydrophobe} and DS_{alkyl}, can be determined by gas chromatography following degradation of the cellulose ether with HBr in glacial acetic acid, according to the procedure set out in Stead, J.B., & Hindley, H., (1969) "A modified method for the analysis oxyethylene/oxypropylene copolymers by chemical fission and gas chromatography" Journal of Chromatography, 42, 470-475.

The polyol having 3-4 hydroxyl groups suitable for use in the present invention is a non-ionic compound, preferably selected from the group consisting of pentaerythritol, glycerol, trimethylolpropane, di-trimethylolpropane, erythritol, threitol, C₂₋₄ alkylene oxide adducts thereof, and mixtures thereof. The C₂₋₄ alkylene oxide adducts are preferably obtained by reacting the starting polyol with from 1, 2, 3, 4 or 5, to 50, 30, 25, 20 or 10 moles of alkylene oxide per mole of starting polyol. The alkylene oxide is preferably ethylene oxide. Preferably the polyol having 3-4 hydroxyl groups comprises, or is, glycerol or an ethylene oxide adduct of glycerol.

The salt of a multivalent inorganic anion, i.e. a salt with an inorganic anion having two or more negative charges, for use in the present invention is preferably selected from the group consisting of sulfates, phosphates and mixtures thereof. Suitable sulfate salts include sodium sulfate and potassium sulfate. Suitable phosphate salts include orthophosphate and polyphosphate salts, such as diammonium orthophosphate, ammonium diphosphate, disodium orthophosphate, sodium pyrophosphate, dipotassium orthophosphate, potassium pyrophosphate, sodium hydrogen orthophosphate and potassium hydrogen orthophosphate. The salt is needed in the composition to suppress the swelling of the polysaccharide ether.

The multivalent inorganic anion salts are typically provided in the water, as salt water. The concentration of the multivalent inorganic anion salt in the salt water is below the saturation concentration at 20°C and atmospheric pressure, typically from 4 to 20 wt%, based on the total weight of the salt water.

In the liquid composition of the invention, the weight ratio of the polyol having 3-4 hydroxyl groups to the salt water is preferably from 75:25 to 95:5, more preferably from 80:20 to 90:10. It is important to have an appropriate balance between the polyol and salt water. Too much polyol results in a highly viscous composition which is not easily diluted in water. Too much salt water results in worsened freeze-thaw properties.

On the other hand, a high total amount of polyol is needed to enable a high concentration of polysaccharide ether, and a certain amount of water is needed to reduce the viscosity.

The liquid composition of the present invention can contain further components in addition to those mentioned above, such as pH adjusting agents, polymeric carboxylic acids and preservatives.

The desired pH of the composition of the invention is preferably around neutral, such as from 6 to 8. Suitable pH adjusting agents include acids, and bases. The pH adjusting agent is added in sufficient amounts to yield the desired pH. Citric acid, for instance, could suitably be included in the composition of the invention at a concentration of from 0.001 to 1 wt%, preferably from 0.01 to 0.5 wt%, based on the total weight of the composition.

Polymeric carboxylic acids, or fully or partially neutralized salts thereof can suitably be included in the composition of the invention in order to further improve the dilution properties. Suitable polymeric carboxylic acids are water soluble and include poly(meth)acrylic acid and copolymers of (meth)acrylic acid with one or more ethylenically unsaturated monomers. The polymeric carboxylic acids are preferably provided as the fully or neutralized salts, such as the sodium salt. The polymeric carboxylic acids can suitably be included in the composition of the invention at a concentration of from 1 to 10, preferably 2 to 8, more preferably from 4 to 6 wt%, based on the total weight of the composition. The weight average molecular weight of the polymeric carboxylic acids is preferably in the range from 500 to 50.000 Da, such as from 1000 to 10.000 Da.

Preservatives can suitably be included in the composition of the invention to prevent microbial growth therein.

The composition of the invention is liquid in the sense that it is in liquid state at 20°C and a pressure of one atmosphere.

The liquid composition of the invention is typically prepared by dispersing the polysaccharide ether in powder form in a mixture comprising the polyol having 3-4 hydroxyl groups, water, salt of multivalent inorganic anion and optionally further components. Suitably, the salt of multivalent inorganic anion is mixed with water, followed by addition of the polyol having 3-4 hydroxyl groups. Subsequently, the polysaccharide ether is mixed with the water/salt/polyol system.

In another aspect, the present invention relates to the use of a mixture comprising a polyol having 3-4 hydroxyl groups, water and at least one salt of a multivalent inorganic anion, and optionally a polymeric carboxylic acid or salt thereof, as a dispersion agent for a non-ionic, water-soluble polysaccharide ether, wherein the weight ratio of the polyol to the sum of water and salt(s) of multivalent anion in the mixture is from 75:25 to 95:5, preferably from 80:20 to 90:10, and the concentration of the salt of multivalent anion in water is from 4 to 20 wt% based on the total weight of the salt and water, as well as the a liquid composition comprising from 2 to 30, preferably 2 to 25, more preferably from 5 to 20, most preferably from 8 to 16 wt%, based on the total weight of the liquid composition, of a water-soluble, non-ionic polysaccharide ether and from 70 to 99, preferably from 75 to 98, more preferably from 80 to 95 and most preferably from 84 to 92 wt%, based on the total weight of the liquid composition, of such a mixture, wherein the water soluble non-ionic polysaccharide, the polyol having 3-4 hydroxyl groups, the salt of a multivalent inorganic anion and the polymeric carboxylic acid or salt thereof are as defined herein.

In another aspect, the present invention relates to a method of preparing an agricultural formulation, comprising adding at least one agriculturally active agent and the liquid composition of the invention to water in amounts to obtain a concentration of the polysaccharide ether of from 0.005, preferably from 0.01, more preferably from 0.02, still more preferably from 0.03 and most preferably from 0.04, to 0.5, preferably to 0.4, more preferably to 0.3, even more preferably to 0.2 and most preferably to 0.1 wt%, based on the total weight of the agricultural formulation. Alternatively, the water could be added to the at least one agriculturally active agent and the liquid composition of the invention. The agricultural formulation will also contain the polyol having 3-4 carboxyl groups and the multivalent ion salts, as they were added with the polysaccharide ether.

In one embodiment, the liquid composition of the present invention, in its concentrated state, with a polysaccharide ether concentration of from 2 to 30 wt%, further comprises at least one agriculturally active agent. In such composition, the ratio of water-soluble polysaccharide ether to agriculturally active agent is selected such that when the composition is added to water to a suitable end-use concentration of the polysaccharide ether, the desired end-use concentration of the agriculturally active agent is reached. Hence, in the method above, and where an agriculturally active agent is present in the concentrated liquid composition, the step of adding at least one agriculturally active agent to water is optional.

In the agricultural formulation, the concentration of the agriculturally active agent is the desired end-use concentration at which it is to be applied to the plants. Those skilled in the art will understand that this desired concentration will depend on the type of agriculturally active agent used, the plant to be treated, efficacy enhancing adjuvants in the formulation, weather conditions, etc. However, the concentration of the agriculturally active agent is typically in the range of from 0.005, 0.01, 0.02, 0.03 or 0.04, to 2, 1, 0.5, 0.4 or 0.1 wt%, based on the total weight of the agricultural formulation.

Agriculturally active agents suitable for use in the present invention include organic compounds that are classified as pesticides or plant growth regulators.

As used herein, the term "pesticide" refers to an organic compound which will prevent, destroy, repel or mitigate any pest. Pesticides contemplated for use in the present invention include fungicides, herbicides, insecticides, miticides, nematicides, acaricides, and molluscicides.

As used herein, the term "plant growth regulator" refers to an organic compound, which through physiological action will accelerate or retard the rate of growth or rate of maturation or otherwise alter the behaviour of ornamental or crop plants or the products thereof. Plant growth regulators contemplated for use in the present invention include abscisic acids, auxins, cytokinins and gibberellins.

Preferred pesticides contemplated for use in the present invention include pesticides and plant growth regulators of the classes triazoles, strobilurins, alkylenebis(dithiocarbamate) compounds, benzimidazoles, phenoxy carboxylic acids, benzoic acids, sulfonylureas, triazines, pyridine carboxylic acids, neonicotinides, amidines, organophosphates, and pyrethroids, and salts and esters of the acid compounds.

Examples of fungicides contemplated for use in the present invention include fungicides of the classes triazoles (e.g. tebuconazole, tetraconazole, cyproconazole, epoxiconazole, difenconazole, propiconazole, prothioconazole), strobilurins (e.g. trifloxystrobin, azoxystrobin, fluoxastrobin, pyraclostrobin), alkylenebis(dithiocarbamate) compounds (e.g. mancozeb) and benzimidazoles (e.g carbendazim).

Examples of herbicides contemplated for use in the present invention include phenoxy carboxylic acids (e.g. 2,4-D-acid, MCPA), benzoic acids (e.g. Dicamba-acid), sulfonylureas (e.g. methylsulfuron-methyl, rimsulfuron), triazines (e.g. atrazine and simazine), triazolinones (e.g. amicarbazone) and pyridine carboxylic acids (e.g. triclopyr).

Examples of insecticides contemplated for use in the present invention include neonicotinides (e.g. thiamethoxam, clothianidin, thiacloprid, dinotefuran, acetamiprid, nitenpyram, imidacloprid), amidines (e.g. amitraz), organophosphates (e.g. chlorpyrifos) and pyrethroids (e.g. permethrin, bifenthrin, deltamethrin).

For a detailed description of each of the above-mentioned pesticides and plant growth regulators, reference is made to handbooks, e.g. "The e-Pesticide Manual v4.0" from BCPC Publications Ltd, Alton, Hampshire. (ISBN 1 901396 42 8).

In addition to the water, the water-soluble, non-ionic polysaccharide ether, the polyol having 3-4 carboxyl groups, the salt of multivalent inorganic anion and the agriculturally active agent, the agricultural formulations of the present invention may contain additional components. Nonlimiting examples of such additional components include for example oils, co-solvents, and other adjuvants, such as surfactants, that are conventionally used to increase the bioefficacy of agricultural active ingredients.

The agriculturally active agent may, depending inter alia on its water solubility and the desired concentration, be added to the water as a powder, granulate or liquid, dissolved in a solvent, or dispersed/emulsified in a continuous phase, as is known in the art.

In the agricultural formulation of the present invention, the agriculturally active agent may be present as dispersed particles, in emulsion droplets and/or dissolved in the aqueous phase.

In yet another aspect, the present invention relates to a method for treating a plant, comprising the step of contacting the plant with the agricultural formulation of the invention, preferably by means of spraying the agricultural formulation onto the plant.

### Experiments

### Example 1

Sample formulations as described in Table 1 below were prepared by first mixing ammonium sulphate (AMS), together with sodium tripolyphosphate (STPP) and citric acid (CA) into water, followed by addition of glycerol. Thereafter methyl ethyl hydroxy ethyl cellulose (MEHEC) and polyacrylic acid (PAA) was added. All mixing steps were performed at room temperature under atmospheric pressure using a mechanical overhead mixer.

The MEHEC used in this example was a methyl ethyl hydroxylethyl cellulose having MS_{hydroxyethyl} of 1.1, DS_{ethyl} of 0.3, DS_{methyl} of 0.7 and a 1% viscosity of 12,000 mPa*s (ex AkzoNobel), and was provided as a powder.

The polyacrylic acid used in this example had a weight average molecular weight of about 5,000 Da (ex AkzoNobel), as was provided as a powder.

The initial appearance of the samples was assessed by ocular inspection directly after the sample preparation. Thereafter, the samples were subjected to a freeze-thaw treatment by putting the samples in a freezer at -20 °C over night, thawing the samples at +25 °C for about 6 hours, and repeating this freeze-thaw cycle two more times. After this treatment, the samples were gently shaken by hand and their appearance was again assessed.

The results from this experiment are reported in Table 1 below.

**Table 1: Composition of the Samples and Assessment of Their Physical Appearance**

| **Sample** | **Total Sample Weight (g)** | **AMS (wt%)** | **STPP (wt%)** | **CA (wt%)** | **MEHEC (wt%)** | **PAA (wt%)** | **Water (wt%)** | **Glycerol (wt%)** | **Initial Appearance** | **Appearance after freeze-thaw treatment** |
|---|---|---|---|---|---|---|---|---|---|---|
| A | 30.0012 | 5.89 | 4.89 | 0.33 | 12.00 | 0 | 76.88 | 0.00 | Lumpy Liquid | Not Stable - lumpy, irreversible phase separation |
| B | 11.3655 | 5.29 | 4.39 | 0.30 | 12.01 | 0 | 69.06 | 8.94 | Pourable Liquid | Not Stable - irreversible phase separation |
| C | 11.3652 | 4.70 | 3.91 | 0.27 | 12.01 | 0 | 61.42 | 17.69 | Pourable Liquid | Not Stable - irreversible phase separation |
| D | 11.3432 | 2.95 | 2.45 | 0.17 | 12.02 | 0 | 38.53 | 43.88 | Pourable Liquid | Not Stable - irreversible phase separation |
| E | 30.0063 | 2.68 | 2.22 | 0.15 | 10.00 | 0 | 34.96 | 49.99 | Pourable Liquid | Not Stable - irreversible phase separation |
| F | 30.0010 | 2.01 | 1.67 | 0.11 | 20.01 | 0 | 26.20 | 50.01 | Too viscous, not flowing | Not Stable - irreversible phase separation |
| G | 30.0173 | 0 | 0 | 0 | 12.51 | 0 | 28.77 | 58.72 | Gelled/Solid, Not a Liquid | N/A |
| H | 30.0532 | 0 | 0 | 0 | 20.14 | 0 | 0 | 79.86 | Gelled/Solid, Not a Liquid | N/A |
| I | 30.0336 | 0 | 0 | 0 | 14.99 | 0 | 17.57 | 67.44 | Gelled/Solid, Not a Liquid | N/A |
| J | 30.2261 | 0 | 0 | 0 | 9.94 | 0 | 40.14 | 49.92 | Gelled/Solid, Not a Liquid | N/A |
| K | 30.0053 | 1.17 | 0.97 | 0.07 | 15.01 | 0 | 15.29 | 67.49 | Pourable Liquid | Stable |
| L | 30.0138 | 1.18 | 0.98 | 0.07 | 12.00 | 0 | 15.42 | 70.36 | Pourable Liquid | Stable |
| M | 30.0369 | 0.59 | 0.49 | 0.03 | 17.48 | 0 | 7.72 | 73.68 | Pourable Liquid | Stable |
| N | 30.0179 | 0.59 | 0.49 | 0.03 | 12.49 | 0.00 | 7.68 | 78.72 | Pourable Liquid | Stable |
| O | 100.0724 | 0.59 | 0.49 | 0.03 | 12.00 | 0 | 7.70 | 79.19 | Pourable Liquid | Stable |
| P | 98.1454 | 0.55 | 0.45 | 0.03 | 12.29 | 6.15 | 7.14 | 73.39 | Pourable Liquid | Stable |
| R | 100.0656 | 1.18 | 0.98 | 0.07 | 12.02 | 0 | 15.37 | 70.38 | Pourable Liquid | Stable |
| S | 100.1016 | 1.10 | 0.91 | 0.06 | 12.00 | 6.04 | 14.33 | 65.56 | Pourable Liquid | Stable |
| T | 100.0100 | 3.40 | 3.40 | 0.25 | 10 | 10 | 72.95 | 0 | Lumpy Liquid | Not Stable - lumpy, irreversible phase separation |

From the results in Table 1, it is apparent that the samples according to the invention were pourable liquids and stable towards the freeze-thaw treatment.

### Example 2

The dissolution properties of samples O to T from Example 1 above were tested according to the following.

To a 500 ml beaker, 300 ml of water was added. About 1 g of the sample was added to the water under gentle magnetic stirring at room temperature. The dissolution progress was monitored visually and the time it took for all traces of solid to disappear was recorded, and is reported in table 2 below.

**Table 2: Dissolution rates**

| **Sample** | **Time for Complete Dissolution** |
|---|---|
| O | 1 - 1.5 hours |
| P | 10 minutes |
| R | 2 - 2.5 hours |
| S | 10 minutes |
| T | > 6 hours |

As is apparent from the results, the samples of according to the invention were easier to dilute in water, and that the addition of polyacrylic acid further improved the dissolution properties.

## Claims

1. A liquid composition comprising
a) 2 to 30 wt%, based on the total weight of the liquid composition, of a non-ionic water-soluble polysaccharide ether;
b) 55 to 90 wt%, based on the total weight of the liquid composition, of a polyol having 3 to 4 hydroxyl groups;
c) 5 to 25 wt%, based on the total weight of the liquid composition, of water; and
d) 0.1 to 5 wt%, based on the total weight of the liquid composition, of at least one multivalent inorganic anion salt.

2. A composition according to claim 1 comprising 5 to 20 wt%, based on the total weight of the liquid composition, of a non-ionic water-soluble polysaccharide ether.

3. A composition according to claim 1 comprising 8 to 16 wt%, based on the total weight of the liquid composition, of a non-ionic water-soluble polysaccharide ether.

4. A composition according to claim 1 to 3, wherein said polysaccharide ether is cellulose ether or guar gum ether.

5. A composition according to claim 1 to 4, wherein said polysaccharide ether is a cellulose ether selected from the group consisting of hydroxyethyl cellulose, ethyl hydroxyethyl cellulose, hydroxybutyl methylcellulose, hydroxypropyl methylcellulose, methyl ethyl hydroxyethyl cellulose, and hydrophobically modified ethyl hydroxyethyl cellulose.

6. A composition according to any one of the claims 1 to 5, comprising a cellulose ether having a viscosity of at least 7.000 mPa*s, as measured at 1 wt% concentration in water at pH 7 with a Brookfield viscosimeter, type LV, at 12 rpm at 20°C, spindle No 3.

7. A composition according to any one of the preceding claims, wherein said polysaccharide ether has a DS_{alkyl} of 0 or from 0.1 to 2.5 wherein the alkyl has 1-4 carbon atoms

8. A composition according to any one of the preceding claims, comprising a cellulose ether having a MS_{hydroxyalkyl} of 0 or from 0.2 to 4.0, and the hydroxyalkyl is hydroxyethyl, hydroxypropyl or hydroxybutyl.

9. A composition according to any one of the preceding claims, comprising a cellulose ether having a MS_{hydrophobe} of 0 or from 0.001 to 0.02, wherein the hydrophobe is a hydrocarbyl group having from 10 to 18 carbon atoms.

10. A composition according to any one of the preceding claims, wherein said multivalent inorganic anion salts comprises salts of sulfates, phosphates and mixtures thereof.

11. A composition according to any one of the preceding claims, wherein said polyol having 3 to 4 hydroxyl groups is selected from the group consisting of pentaerythritol, glycerol, trimethylolpropane, di-trimethylolpropane, erythritol, threitol and C₂₋₄ alkylene oxide adducts thereof, and mixtures thereof.

12. A composition according to any one of the preceding claims, wherein the weight ratio of b) to c+d) is from 75:25 to 95:5.

13. A composition according to any one of the preceding claims, further comprising at least one component selected from the group consisting of pH adjusting agents, polymeric carboxylic acids and preservatives.

14. A composition according to any one of the preceding claims, further comprising at least one agriculturally active agent.

15. A method for preparing an aqueous agricultural formulation, comprising adding at least one agriculturally active ingredient and a sufficient amount of the composition as defined in any one of the claims 1 to 13 to water in order to obtain an aqueous composition comprising the agriculturally active ingredient and from 0.005 to 0.5 wt%, based on the total weight of the agricultural formulation, of the non-ionic linear polysaccharide ether.

16. An aqueous agricultural formulation obtained by the method of claim 15.

17. A method for treating a plant comprising contacting said plant with an agricultural formulation according to any one of the claims 15 and 16, preferably by spraying the agricultural formulation onto said plant.

18. The use of a mixture comprising a polyol having 3-4 hydroxyl groups, water and at least one salt of a multivalent anion, as a dispersion agent for a non-ionic, water-soluble polysaccharide ether, wherein the weight ratio of the polyol to the sum of water and the salt of a multivalent inorganic anion in the mixture is from 75:25 to 95:5, preferably from 80:20 to 90:10, and the concentration of the salt of multivalent inorganic anion is from 4 to 20 wt% based on the total weight of the salt of multivalent inorganic anion and water.

## Patentansprüche

1. Flüssige Zusammensetzung mit
a) 2 bis 30 Gew-%, bezogen auf das Gesamtgewicht der flüssigen Zusammensetzung, eines nicht ionischen, wasserlöslichen Polysaccharidethers;
b) 55 bis 90 Gew-%, bezogen auf das Gesamtgewicht der flüssigen Zusammensetzung, eines Polyols mit 3 bis 4 Hydroxylgruppen;
c) 5 bis 25 Gew-%, bezogen auf das Gesamtgewicht der flüssigen Zusammensetzung, Wasser; sowie
d) 0,1 bis 5 Gew-%, bezogen auf das Gesamtgewicht der flüssigen Zusammensetzung, von mindestens einem mehrwertigen anorganischen Anionsalz.

2. Zusammensetzung nach Anspruch 1, mit 5 bis 20 Gew-%, bezogen auf das Gesamtgewicht der flüssigen Zusammensetzung, eines nichtionischen wasserlöslichen Polysaccharidethers.

3. Zusammensetzung nach Anspruch 1, mit 8 bis 16 Gew-%, bezogen auf das Gesamtgewicht der flüssigen Zusammensetzung, eines nichtionischen, wasserlöslichen Polysaccharidethers.

4. Zusammensetzung nach Anspruch 1 bis 3, wobei der Polysaccharidether aus Zelluloseether oder Guargummi-Ether besteht.

5. Zusammensetzung nach Anspruch 1 bis 4, wobei der Polysaccharidether aus einem Zelluloseether ausgewählt aus der Gruppe bestehend aus Hydroxyethyl-Zellulose, Ethylhydroxyethyl-Zellulose, Hydroxybutylmethyl-Zellulose, Hydroxypropylmethyl-Zellulose, Methylethyl-Hydroxyethyl-Zellulose und hydrophob modifizierter Ethylhydroxyethyl-Zellulose besteht.

6. Zusammensetzung nach einem der Ansprüche 1 bis 5, mit einem Zelluloseether mit einer Viskosität von mindestens 7,000 mPa*s, gemessen bei einer Konzentration von 1 Gew-% in Wasser mit pH 7 mit einem Brookfield Viskosimeter, Typ LV, mit 12 U/min bei 20C°, Spindel Nr. 3.

7. Zusammensetzung nach einem der vorhergehenden Ansprüche, wobei der Polysaccharidether einen DS_{Alkyl} von 0 oder von 0,1 bis 2,5 aufweist, wobei das Alkyl 1-4 Kohlenstoffatome hat.

8. Zusammensetzung nach einem der vorhergehenden Ansprüche, mit einem Zelluloseether mit einem MS_{Hydroxyalkyl} von 0 oder von 0,2 bis 4,0, wobei das Hydroxyalkyl aus Hydroxyethyl, Hydroxypropyl oder Hydroxybutyl besteht.

9. Zusammensetzung nach einem der vorhergehenden Ansprüche, mit einem Zelluloseether mit einem MS_{hydrophob} von 0 oder von 0,001 bis 0,02, wobei hydrophob eine Hydrocarbylgruppe mit 10 bis 18 Kohlenstoffatomen bezeichnet.

10. Zusammensetzung nach einem der vorhergehenden Ansprüche, wobei die mehrwertigen anorganischen Anionsalze Salze von Sulfaten, Phosphaten und Mischungen aus diesen umfassen.

11. Zusammensetzung nach einem der vorhergehenden Ansprüche, wobei das Polyol mit 3 bis 4 Hydroxylgruppen aus der Gruppe bestehend aus Pentaerythritol, Glycerin, Trimethylolpropan, di-Trimethylolpropan, Erythritol, Threitol und C₂₋₄Alkylenoxid-Addukten von diesen sowie Mischungen aus diesen ausgewählt ist.

12. Zusammensetzung nach einem der vorhergehenden Ansprüche, wobei das Gewichtsverhältnis von b) zu c+d) zwischen 75:25 und 95:5 liegt.

13. Zusammensetzung nach einem der vorhergehenden Ansprüche, weiterhin mit mindestens einem Bestandteil ausgewählt aus der Gruppe bestehend aus Wirkstoffen zur Einstellung des pH, polymeren Carboxylsäuren und Konservierungsstoffen.

14. Zusammensetzung nach einem der vorhergehenden Ansprüche, weiterhin mit mindestens einem landwirtschaftlich wirksamen Mittel.

15. Verfahren zur Herstellung einer wässrigen landwirtschaftlichen Formulierung mit der Zugabe von mindestens einem landwirtschaftlich wirksamen Bestandteil und einer ausreichenden Menge der Zusammensetzung wie in einem der Ansprüche 1 bis 13 definiert, zur Gewinnung einer wässrigen Zusammensetzung mit dem landwirtschaftlich wirksamen Bestandteil und zwischen 0,005 und 0,5 Gew-%, bezogen auf das Gesamtgewicht der landwirtschaftlichen Formulierung, des nichtionischen linearen Polysaccharidethers.

16. Wässrige landwirtschaftliche Formulierung, die durch das Verfahren nach Anspruch 15 gewonnen wird.

17. Verfahren zur Behandlung einer Pflanze, umfassend das In-Kontakt-Bringen der Pflanze mit einer landwirtschaftlichen Formulierung nach einem der Ansprüche 15 und 16, vorzugsweise durch Sprühen der landwirtschaftlichen Formulierung auf die Pflanze.

18. Verwendung einer Mischung mit einem Polyol mit 3-4 Hydroxylgruppen, Wasser und mindestens einem Salz eines mehrwertigen Anions als Dispersionsmittel für einen nichtionischen, wasserlöslichen Polysaccharidether, wobei das Gewichtsverhältnis des Polyols zu der Summe von Wasser und dem Salz eines mehrwertigen anorganischen Anions in der Mischung zwischen 75:25 und 95:5, vorzugsweise zwischen 80:20 und 90:10 liegt, und die Konzentration des Salzes eines mehrwertigen anorganischen Anions zwischen 4 und 20 Gew-%, bezogen auf das Gesamtgewicht des Salzes eines mehrwertigen anorganischen Anions und Wasser, beträgt.

## Revendications

1. Composition liquide comprenant
a) 2 à 30% en poids, par rapport au poids total de la composition liquide, d'un éther de polysaccharide hydrosoluble non ionique ;
b) 55 à 90% en poids, par rapport au poids total de la composition liquide, d'un polyol ayant 3 à 4 groupes hydroxyle ;
c) 5 à 25% en poids, par rapport au poids total de la composition liquide, d'eau ; et
d) 0,1 à 5% en poids, par rapport au poids total de la composition liquide, d'au moins un sel d'anion inorganique polyvalent.

2. Composition selon la revendication 1, comprenant 5 à 20% en poids, par rapport au poids total de la composition liquide, d'un éther de polysaccharide hydrosoluble non ionique.

3. Composition selon la revendication 1, comprenant 8 à 16% en poids, par rapport au poids total de la composition liquide, d'un éther de polysaccharide hydrosoluble non ionique.

4. Composition selon les revendications 1 à 3, dans laquelle ledit éther de polysaccharide est un éther de cellulose ou un éther de gomme de guar.

5. Composition selon les revendications 1 à 4, dans laquelle ledit éther de polysaccharide est un éther de cellulose choisi dans le groupe constitué par l'hydroxyéthylcellulose, l'éthylhydroxyéthylcellulose, l'hydroxybutylméthylcellulose, l'hydroxypropylméthylcellulose, la méthyléthylhydroxyéthylcellulose, et l'éthylhydroxyéthylcellulose à modification hydrophobe.

6. Composition selon l'une quelconque des revendications 1 à 5, comprenant un éther de cellulose ayant une viscosité d'au moins 7000 mPa*s, telle que mesurée à une concentration de 1% en poids dans l'eau à un pH de 7 avec un viscosimètre Brookfield, type LV, à 12 tr/min à 20°C, broche No 3.

7. Composition selon l'une quelconque des revendications précédentes, dans laquelle ledit éther de polysaccharide présente un DS_{alkyle} égal à 0 ou allant de 0,1 à 2,5, où l'alkyle a 1 à 4 atome(s) de carbone.

8. Composition selon l'une quelconque des revendications précédentes, comprenant un éther de cellulose présentant une MS_{hydroxyalkyle} égale à 0 ou allant de 0,2 à 4,0, et l'hydroxyalkyle est un hydroxyéthyle, un hydroxypropyle ou un hydroxybutyle.

9. Composition selon l'une quelconque des revendications précédentes, comprenant un éther de cellulose présentant une MS_{hydrophobe} égale à 0 ou allant de 0,001 à 0,02, où le groupe hydrophobe est un groupe hydrocarbyle ayant 10 à 18 atomes de carbone.

10. Composition selon l'une quelconque des revendications précédentes, dans laquelle lesdits sels d'anions inorganiques polyvalents comprennent des sels de sulfates, de phosphates et leurs mélanges.

11. Composition selon l'une quelconque des revendications précédentes, dans laquelle ledit polyol ayant 3 à 4 groupes hydroxyle est choisi dans le groupe constitué de pentaérythritol, de glycérol, de triméthylolpropane, de di-triméthylolpropane, d'érythritol, de thréitol et de produits d'addition d'oxyde d'alkylène en C₂ à C₄ de ceux-ci, et les mélanges de ceux-ci.

12. Composition selon l'une quelconque des revendications précédentes, dans laquelle le rapport en poids de b) sur c+d) est de 75:25 à 95:5.

13. Composition selon l'une quelconque des revendications précédentes, comprenant en outre au moins un composant choisi dans le groupe constitué d'agents d'ajustement de pH, d'acides carboxyliques polymères et d'agents de conservation.

14. Composition selon l'une quelconque des revendications précédentes, comprenant en outre au moins un agent actif en agriculture.

15. Procédé de préparation d'une formulation agricole aqueuse, comprenant l'ajout d'au moins un ingrédient actif en agriculture et d'une quantité suffisante de la composition telle que définie dans l'une quelconque des revendications 1 à 13 à de l'eau afin d'obtenir une composition aqueuse comprenant l'ingrédient actif en agriculture et 0,005 à 0,5% en poids, par rapport au poids total de la formulation agricole, de l'éther de polysaccharide linéaire non ionique.

16. Formulation agricole aqueuse obtenue par le procédé de la revendication 15.

17. Procédé de traitement d'une plante comprenant la mise en contact de ladite plante avec une formulation agricole selon l'une quelconque des revendications 15 et 16, de préférence par pulvérisation de la formulation agricole sur ladite plante.

18. Utilisation d'un mélange comprenant un polyol ayant 3 à 4 groupes hydroxyle, de l'eau et au moins un sel d'un anion polyvalent, en tant qu'agent de dispersion pour un éther de polysaccharide hydrosoluble non ionique, où le rapport en poids du polyol sur la somme de l'eau et du sel d'un anion inorganique polyvalent dans le mélange est de 75:25 à 95:5, de préférence de 80:20 à 90:10, et la concentration du sel d'anion inorganique polyvalent est de 4 à 20% en poids par rapport au poids total du sel d'anion inorganique polyvalent et de l'eau.
